# EUROPÄISCHE PATENTSCHRIFT

(11) **EP 2 108 857 B1**
(45) Veröffentlichungstag und Bekanntmachung des Hinweises auf die Patenterteilung: **06.08.2014**
(21) Anmeldenummer: 09004006.4
(22) Anmeldetag: 20.03.2009
(51) Int. Cl.: F16F 9/46

(54) **Dämpfungsventil für einen hydraulischen Schwingungsdämpfer**
Damping valve for a hydraulic vibration damper
Soupape pour un amortisseur en vibration hydraulique

(30) Priorität: 20.03.2008 DE 102008015415
(43) Veröffentlichungstag der Anmeldung: 14.10.2009
(73) Patentinhaber: ThyssenKrupp Bilstein GmbH, 58256 Ennepetal (DE)
(72) Erfinder: Schmidt, Klaus, 51519 Odenthal (DE); Hamers, Wolfgang, 52428 Jülich (DE)
(74) Vertreter: Albrecht, Rainer Harald

(56) Entgegenhaltungen:
- EP-A1- 1 538 366
- DE-A1- 19 624 898

## Beschreibung

Die Erfindung betrifft ein Dämpfungsventil für einen hydraulischen Schwingungsdämpfer mit
einem axial beweglichen Stellschieber, der einen Schaft und einen hohlzylindrischen Ventilkörper aufweist,
einem elektromagnetischen Linearantrieb zur axialen Verstellung des Stellschiebers und
einem ortsfest angeordnetem Führungskörper, der als Hohlkörper ausgebildet ist und ein zapfenförmiges Ende aufweist,
wobei der hohlzylindrische Ventilkörper auf dem zapfenförmigen Ende des Führungskörpers geführt ist und mit mindestens einer im Mantel des Führungskörpers angeordneten Ventilöffnung derart zusammenwirkt, dass der freie Querschnitt der Ventilöffnung durch eine Axialbewegung des Ventilkörpers veränderbar ist. Das Dämpfungsventil kann in einem Gehäuse angeordnet werden, das einen Strömungseinlass sowie einen Strömungsauslass aufweist und als sogenanntes "Rucksackventil" an der Außenseite eines hydraulischen Schwingungsdämpfers befestigbar ist. Der Strömungseinlass und -auslass des Gehäuses ist hydraulisch an Fluidräume des Schwingungsdämpfers angeschlossen. Durch Betätigung des Stellschiebers ist die Dämpfungskraft des hydraulischen Schwingungsdämpfers stufenlos veränderbar. Werden einem Schwingungsdämpfer zwei Dämpfungsventile zugeordnet, so ist es möglich, die Dämpfungskräfte in der Zugstufe und der Druckstufe des Schwingungsdämpfers unabhängig voneinander beliebig zu verändern.

Ein Dämpfungsventil mit den eingangs beschriebenen Merkmalen ist aus EP 1 538 366 A1 bekannt. Der Stellschieber der bekannten Ausführung ist im Bereich des dünnwandigen, hohlzylindrisch ausgebildeten Ventilkörpers geführt. Der Schaft des Stellventils ist mit Spiel von einem Gehäuseteil umgeben, welches mit dem Führungskörper nicht verbunden ist. Zwischen dem Fluidraum innerhalb des Hohlkörpers und einem den Ventilkörper umgebenden Fluidraum treten erhebliche Druckdifferenzen auf, deren Größe abhängig ist von der Funktionsstellung der Kolbenbewegung des Schwingungsdämpfers. Infolge der Druckdifferenzen wirken auf den Stellschieber erhebliche, schwankende Radialkräfte, die von der Führung bzw. Lagerung des Stellschiebers aufgenommen werden müssen. Die auf den Stellschieber radial wirkenden Störkräfte erschweren eine exakte Stellbewegung und Positionierung des Ventilkörpers. Vor diesem Hintergrund besteht ein Bedürfnis, die Führung und Lagerung des Stellschiebers zu verbessern,

Der Erfindung liegt die Aufgabe zugrunde, ein Dämpfungsventil mit den eingangs beschriebenen Merkmalen konstruktiv so zu verändern, dass unter allen Betriebsbedingungen definierte und genaue Stellbewegungen des Stellschiebers gewährleistet sind.

Die Aufgabe wird erfindungsgemäß dadurch gelöst, dass der Stellschieber in einem Polrohr angeordnet ist, das am Führungskörper fixiert ist, und dass der Schaft des Stellschiebers mit einer Spielpassung in einem Lagerring geführt ist, der an einem den Schaft umschließenden Abschnitt des Polrohrs festgelegt ist. Erfindungsgemäß ist der Schaft des Stellschiebers an einer zusätzlichen Lagerstelle geführt, die als Lagerring ausgeführt ist und den Schaft des Stellschiebers mit einer Spielpassung, vorzugsweise einer engen Spielpassung wie beispielsweise der Passung H7/g6 nach ISO DIN 7157 umgibt. Die erfindungsgemäße Spielpassung zwischen dem Lagerring und dem Schaft des Stellschiebers setzt voraus, dass die durch den Lagerring definierte Lagerstelle sowie die Lagerstelle zur Führung des hohlzylindrischen Ventilkörpers an dem zapfenförmigen Ende des Führungskörpers exakt fluchten. Dazu leistet das Polrohr einen erfindungswesentlichen Beitrag. Das Polrohr ist an dem Führungskörper abgestützt und an diesem fixiert und gewährleistet eine definierte Zuordnung des den Schaft umgebenden Lagerrings und der Lagerstelle am Führungszapfen des Führungskörpers. Die Fixierung des Polrohrs am Führungskörper muss mit einer Passfläche und spielfrei ausgeführt sein. Die Befestigung mittels eines Gewindes ist aufgrund des Gewindespiels weniger geeignet. Vorzugsweise ist das Polrohr mit einer Presspassung oder einer Übergangspassung an Passflächen des Führungskörpers fixiert, wobei die Passung beispielsweise als H7/g7-Passung (ISO DIN 7157) ausgeführt sein kann. Sofern das Polrohr mittels einer Übergangspassung am Führungskörper fixiert ist, kann der Stellschieber sowohl im Lagerring als auch an dem zapfenförmigen Ende des Führungskörpers jeweils mit einer Spielpassung, beispielsweise einer engen H7/g6-Passung mit minimalem Radialspiel geführt werden. Die erfindungsgemäße Lageranordnung in Kombination mit einer vorzugsweise als Übergangspassung ausgebildeten Fixierung des Polrohrs am Führungskörper gewährleistet eine unter allen Betriebszuständen definierte, genaue Stellbewegung des Stellschiebers. Fertigungstechnisch hat die erfindungsgemäße Anordnung den weiteren Vorteil, dass die Spielpassungen, die für die Gleitbewegung des Stellschiebers benötigt werden, durch spanende Drehbearbeitungen der Teile herstellbar sind. Aufwendige nachfolgende Finishbearbeitungen, die bei der Herstellung von Sitzventilen üblich sind, sind nicht erforderlich.

Der Lagerring zur Führung des Schaftes besteht zweckmäßig aus einem nicht magnetisierbaren Gleitwerkstoff. Geeignet sind Buntmetalle, insbesondere Kupferlegierungen. Andere Lagerwerkstoffe, z. B. keramische Werkstoffe oder Kunstkohle, sind jedoch nicht ausgeschlossen.

Der Lagerring ist vorzugsweise zwischen dem Ende des Polrohrs und einem axial anschließenden Magnetkern angeordnet und kann aus einem Lot bestehen, welches das Polrohr mit dem Magnetkern stoffschlüssig verbindet. Die Lotstelle bildet gleichzeitig den Lagerring und besteht aus einem nicht magnetisierbaren Lotmaterial, so dass das Polrohr und der Magnetkern über das Lot magnetisch entkoppelt sind.

Alternativ zu der Ausbildung des Lagerringes als ringförmige Lotstelle kann der Lagerring auch durch einen Metallring aus einem nicht magnetisierbaren Metall gebildet sein. Als nicht magnetisierbares Metall kommt beispielsweise austenitischer Stahl in Betracht. Der Metallring kann beispielsweise durch Laserstrahlschweißen oder Elektronenstrahlschweißen einerseits mit dem Polrohr und andererseits mit dem Magnetkern verbunden werden. Die genannten Schweißverfahren haben den Vorteil, dass nur ein sehr geringer Wärmeeintrag in das Schweißgut erfolgt, so dass es nicht zu einem störenden Wärmeverzug der Bauteile kommt und die erforderliche Fertigungsgenauigkeit eingehalten werden kann.

Die aus dem Polrohr, dem Magnetkern und dem Lagerring bestehende Anordnung ist von einer Spule des Linearantriebes umgeben. Der Lagerring weist vorzugsweise ein im Wesentlichen dreieckförmigen oder trapezförmigen Querschnitt auf, wobei die schmale Ringfläche des Lagerrings die Lagerstelle für den Zapfen des Stellantriebes bildet.

Das Polrohr und der Führungskörper begrenzen einen ringförmigen Strömungsraum, in den die Ventilöffnungen des Führungskörpers münden. Das Polrohr weist mantelseitig ferner Durchströmöffnungen auf, durch die Fluid aus dem Strömungsraum drosselfrei abströmen kann. Die Ventilöffnungen des Führungskörpers und die Durchströmöffnungen des Polrohres sind so aufeinander abzustimmen, dass die dämpfende Wirkung des Dämpfungsventils allein aus der Durchströmung der Ventilöffnungen resultiert. Der Dämpfungskraftverlauf ist durch die Kontur der Ventilöffnungen beeinflussbar. Gemäß einer bevorzugten Ausführung der Erfindung weisen die Ventilöffnungen eine herzförmige Kontur auf, die in Schließrichtung des Stellschiebers in einer Spitze ausläuft und ausgehend von der Spitze symmetrisch zu einer durch die Spitze vorgegebenen Symmetrieachse jeweils in einem Bogen in eine flach ansteigende Berandung einer breiten Öffnung übergeht. Die Durchströmöffnungen des umgebenden Polrohres sind zweckmäßig als Bohrungen ausgebildet, deren Bohrungsmittelpunkte vorzugsweise jeweils auf die Symmetrieachse einer Ventilöffnung des Führungskörper gerichtet sind.

Der Schaft des Stellschiebers weist zweckmäßig eine Druckausgleichsbohrung auf, welche den Fluidraum innerhalb des hohlzylindrischen Ventilkörpers mit einem Fluidraum an der rückseitigen Stirnfläche des Schaftes hydraulisch verbindet. In der Zylinderwand des Ventilkörpers ist mindestens eine Öffnung angeordnet, welche in jeder Funktionsstellung des Stellschiebers den Fluidraum innerhalb des Ventilkörpers mit dem ringförmigen Strömungsraum zwischen Polrohr und dem Führungskörper hydraulisch verbindet. Der Ventilkörper weist zweckmäßig eine als Schneide ausgebildete Arbeitskante auf.

Gemäß einer weiteren Ausgestaltung des erfindungsgemäßen Dämpfungsventils ist in den Führungskörper ein passives Dämpfungselement eingesetzt, das nur in einer Richtung durchströmbar ist und eine Rückschlagfunktion aufweist. Das passive Dämpfungsventil kann an einem mit Einströmöffnungen versehenen Deckel angeordnet sein, der an dem Führungskörper befestigbar ist.

Im Folgenden wird die Erfindung anhand von Ausführungsbeispielen erläutert. Es zeigen schematisch:
- **Fig.** 1: einen Längsschnitt durch ein Dämpfungsventil für ein hydraulischen Schwingungsdämpfer,
- **Fig. 2**: eine Anordnung mit zwei Dämpfungsventilen, die in einem gemeinsamen Gehäuse angeordnet sind und eingesetzt werden kann, um die Dämpfungskräfte in der Zugstufe und der Druckstufe eines Schwingungsdämpfers unabhängig voneinander zu verändern.

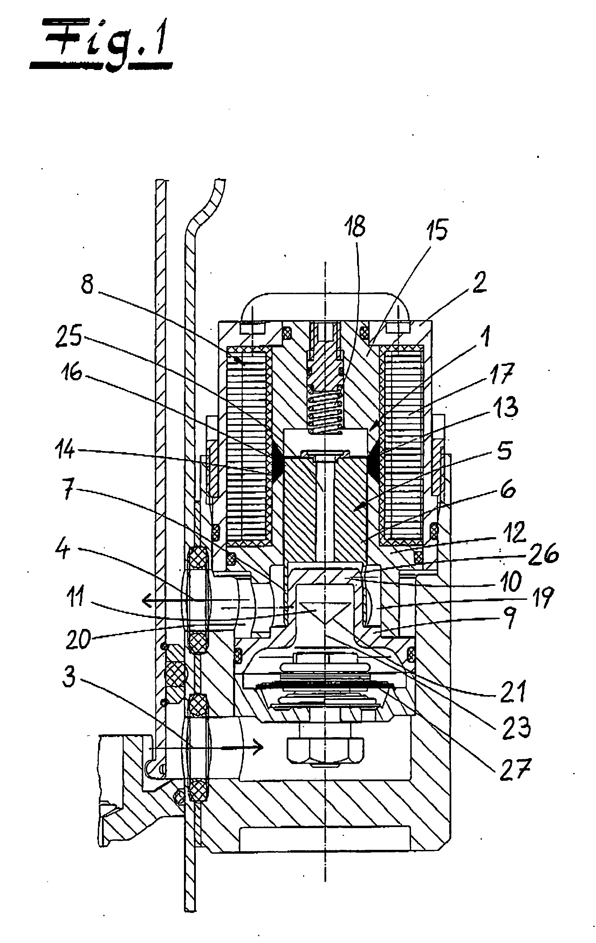

Das in Fig. 1 dargestellte Dämpfungsventil 1 ist in einem Gehäuse 2 angeordnet, welches eine Einlassöffnung 3 und eine Auslassöffnung 4 zum Anschluss an einen hydraulischen Schwingungsdämpfer aufweist. Die Gestaltung des Gehäuses 2 ist beliebig.

Zum grundsätzlichen Aufbau des in Fig. 1 dargestellten Dämpfungsventils 1 gehören ein axial beweglicher und vorzugsweise einteiliger Stellschieber 5, der einen Schaft 6 und einen hohlzylindrischen Ventilkörper 7 aufweist, ein elektromagnetischer Linearantrieb 8 zur axialen Verstellung des Stellschiebers 5 sowie ein ortsfest angeordneter Führungskörper 9, der als Hohlkörper ausgebildet ist und ein zapfenförmiges Ende 10 aufweist. Der hohlzylindrische Ventilkörper 7 ist auf dem zapfenförmigen Ende 10 des Führungskörpers 9 geführt und wirkt mit Ventilöffnungen 11 im Mantel des Führungskörpers 9 dergestalt zusammen, dass der freie Querschnitt der Ventilöffnungen durch eine Axialbewegung des Ventilkörpers veränderbar ist.

Der Stellschieber 5 ist in einem Polrohr 12 angeordnet, das am Führungskörper 9 ohne radiales Spiel fixiert ist. Vorzugsweise erfolgt die Fixierung mittels einer Presspassung oder einer Übergangspassung an Passflächen des Führungskörpers 11. Die Übergangspassung ist beispielsweise als H7/g7-Passung nach ISO DIN 7157 ausgeführt.

Der Schaft 6 des Stellschiebers 5 ist mit einer engen Spielpassung, beispielsweise einer Passung H7/g6 (ISO DIN 7157) in einem Lagerring 13 geführt, der an einem den Schaft 6 umschließenden Abschnitt des Polrohres 12 festgelegt ist. Der Stellschieber 5 ist mit engen Spielpassungen sowohl an dem Lagerring 13 als auch ventilkörperseitig an dem zapfenförmigen Ende 10 des Führungskörpers 9 geführt.

In dem in Fig. 1 dargestellten Ausführungsbeispiel ist der Lagerring 13 zwischen dem Ende des Polrohres 12 und einem axial anschließenden Magnetkern 15 angeordnet und weist einen im Wesentlichen dreieckförmigen oder trapezförmigen Querschnitt auf. Die Anordnung ist so gewählt, dass die schmalere Ringfläche 16 des Lagerrings 13 die Lagerstelle für den Schaft 6 des Stellschiebers 5 bildet.

Der Lagerring 13 besteht aus einem nicht magnetisierbaren Werkstoff, so dass das Polrohr 12 und der Magnetkern 15 magnetisch entkoppelt sind. Der Lagerring 13 kann als Metallring beispielsweise aus einem austenitischen Stahl oder aus einem Buntmetall gefertigt sein. Im Ausführungsbeispiel und gemäß einer bevorzugten Ausführung der Erfindung besteht der Lagerring 13 aus einem Lot, welches das Polrohr 12 mit dem Magnetkern 15 stoffschlüssig verbindet.

Die aus dem Polrohr 12, dem Magnetkern 15 und dem Lagerring 15 bestehende Anordnung ist von einer Spule 17 des Linearantriebs 8 umgeben. Durch Beströmung der Spule 17 wird der Stellschieber 5 gegen die Wirkung einer Druckfeder 18 zurückbewegt, wobei die im Mantel des Führungskörpers 9 angeordneten Ventilöffnungen 11 nach Maßgabe des Stellwegs freigegeben werden. Im stromlosen Zustand ist das Dämpfungsventil geschlossen.

Der Darstellung in Fig. 1 entnimmt man, dass das Polrohr 12 und der Führungskörper 9 einen ringförmigen Strömungsraum 19 begrenzen, in den die Ventilöffnungen 11 des Führungskörpers 9 münden. Das Polrohr 12 weist mantelseitig Durchströmöffnungen 20 auf, durch die Fluid aus dem Strömungsraum 19 drosselfrei abströmen kann. Die Ventilöffnungen 11 weisen eine herzförmige Kontur 21 auf, die in Schließrichtung des Stellschiebers 5 in einer Spitze 22 ausläuft und ausgehend von der Spitze 22 symmetrisch zu einer durch die Spitze vorgegebenen Symmetrieachse 23 jeweils in einem Bogen in eine flach ansteigende Berandung einer breiten Öffnung übergeht. Die Durchströmöffnungen 20 sind als Bohrungen ausgebildet, deren Bohrungsmittelpunkte jeweils auf die Symmetrieachse 23 einer Ventilöffnung des Führungskörpers 9 gerichtet sind.

Der Schaft des Stellschiebers 5 weist eine Druckausgleichsbohrung 25 auf, welche den Fluidraum innerhalb des hohlzylindrischen Ventilkörpers 7 mit einem Fluidraum an der rückseitigen Stirnfläche des Schaftes 6 hydraulisch verbindet. In der Zylinderwand des Ventilkörpers 7 ist mindestens eine Öffnung 26 angeordnet, welche in jeder Funktionsstellung des Stellschiebers 5 den Fluidraum innerhalb des Ventilkörpers mit dem ringförmigen Strömungsraum zwischen dem Hohlrohr und dem Ventilkörper hydraulisch verbindet.

In den Führungskörper 9 ist ferner ein passives Dämpfungselement 27 eingesetzt, das nur in einer Richtung durchströmbar ist. Die Durchströmungsrichtung ist in Fig. 1 durch einen Strömungspfeil angedeutet. Durch Änderung des beschriebenen Dämpfungselementes kann die Durchströmungsrichtung des Dämpfungsventils gegebenenfalls geändert werden, wenn dies in der Praxis wünschenswert erscheint. Das passive Dämpfungselement ist an einem mit Öffnungen versehenen Deckel angeordnet, der an dem Führungskörper befestigt ist.

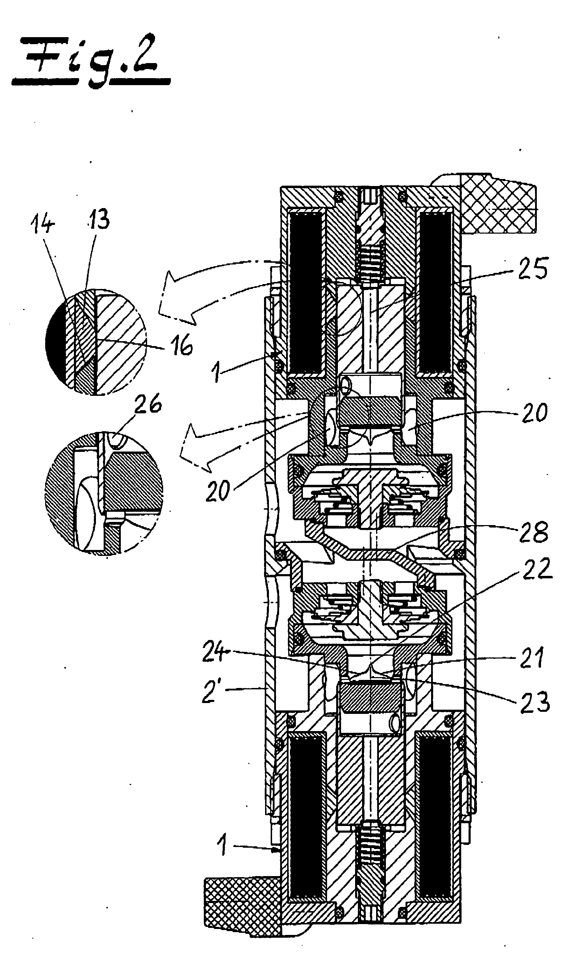

In dem in Fig. 2 dargestellten Ausführungsbeispiel sind in einem gemeinsamen Gehäuse 2', das eine Einlassöffnung sowie einer Auslassöffnung aufweist, zwei erfindungsgemäß ausgebildete, vorzugsweise baugleiche Dämpfungsventile 1 angeordnet. Innerhalb des Gehäuses 2' ist ein Strömungsführungselement 28 vorgesehen, welches zwei Hydraulikräume des Gehäuses 2' derart voneinander trennt, dass die in den ersten Hydraulikraum bei einer Einfahrbewegung der Kolbenstange einströmende Dämpfungsflüssigkeit dem ersten Dämpfungsventil in Ventildurchströmungsrichtung zugeleitet wird und die bei einer Ausfahrbewegung der Kolbenstange in den zweiten Hydraulikraum einströmende Dämpfungsflüssigkeit dem zweiten Dämpfungsventil in Ventildurchströmungsrichtung zugeleitet wird.

## Patentansprüche

1. Dämpfungsventil (1) für einen hydraulischen Schwingungsdämpfer mit
einem axial beweglichen Stellschieber (5), der einen Schaft (6) und einen hohlzylindrischen Ventilkörper (7) aufweist,
einem elektromagnetischen Linearantrieb (8) zur axialen Verstellung des Stellschiebers (5) und
einem ortsfest angeordnetem Führungskörper (9), der als Hohlkörper ausgebildet ist und ein zapfenförmiges Ende (10) aufweist,
wobei der hohlzylindrische Ventilkörper (7) auf dem zapfenförmigen Ende (10) des Führungskörpers (9) geführt ist und mit mindestens einer im Mantel des Führungskörpers (9) angeordneten Ventilöffnung (11) derart zusammenwirkt, dass der freie Querschnitt der Ventilöffnung (11) durch eine Axialbewegung des Ventilkörpers (7) veränderbar ist, **dadurch gekennzeichnet, dass** der Stelischieber (5) in einem Polrohr (12) angeordnet ist, das am Führungskörper (9) fixiert ist, und dass der Schaft (6) des Stellschiebers (5) mit einer Spielpassung in einem Lagerring (13) geführt ist, der an einem den Schaft (6) umschließenden Abschnitt des Polrohres (12) festgelegt ist.

2. Dämpfungsventil (1) nach Anspruch 1, **dadurch gekennzeichnet, dass** das Polrohr (12) mit einer Übergangspassung oder einer Presspassung an Passflächen des Führungskörpers (9) fixiert ist.

3. Dämpfungsventil (1) nach Anspruch 1 oder 2, **dadurch gekennzeichnet, dass** der Stellschieber (5) sowohl in dem Lagerring (13) als auch an dem zapfenförmigen Ende (10) des Führungskörpers (9) jeweils mit einer Spielpassung geführt ist.

4. Dämpfungsventil (1) nach einem der Ansprüche 1 bis 3, **dadurch gekennzeichnet, dass** der Lagerring (13) aus einem Gleitwerkstoff besteht.

5. Dämpfungsventil (1) nach einem der Ansprüche 1 bis 4, **dadurch gekennzeichnet, dass** der Lagerring (13) zwischen dem Ende des Polrohres (12) und einem axial anschließende Magnetkern (15) angeordnet ist und dass die aus dem Polrohr (12), dem Magnetkern (15) und dem Lagerring (13) bestehende Anordnung von einer Spule (17) des Linearantriebs (8) umgeben ist.

6. Dämpfungsventil (1) nach Anspruch 5, **dadurch gekennzeichnet, dass** der Lagerring (13) einen im Wesentlichen dreieckförmigen oder trapezförmigen Querschnitt aufweist wobei die schmalere Ringfläche (16) des Lagerrings (13) die Lagerstelle für den Zapfen des Stellschiebers (5) bildet.

7. Dämpfungsventil (1) nach einem der Ansprüche 1 bis 6, **dadurch gekennzeichnet, dass** das Polrohr (12) und der Führungskörper (9) einen ringförmigen Strömungsraum (19) begrenzen, in den die Ventilöffnungen (11) des Führungskörpers (9) münden, und dass das Polrohr (12) mantelseitige Durchströmöffnungen aufweist, durch die Fluid aus dem Strömungsraum (19) drosselfrei abströmen kann.

8. Dämpfungsventil (1) nach Anspruch 7, **dadurch gekennzeichnet, dass** die Ventilöffnungen (11) eine herzförmige Kontur (21) aufweisen, die in Schließrichtung des Stellschiebers (5) in einer Spitze (22) ausläuft und ausgehend von der Spitze (22) symmetrisch zu einer durch die Spitze (22) vorgegebenen Symmetrieachse (23) jeweils in einem Bogen in eine flach ansteigende Berandung (24) einer breiten Öffnung (26) übergeht.

9. Dämpfungsventil (1) nach Anspruch 8, **dadurch gekennzeichnet, dass** die Durchströmöffnungen (20) als Bohrungen ausgebildet sind, deren Bohrungmittelpunkte jeweils auf die Symmetrieachse (23) einer Ventilöffnung (11) des Führungskörpers (9) gerichtet sind.

10. Dämpfungsventil (1) nach einem der Ansprüche 6 bis 9, **dadurch gekennzeichnet, dass** der Schaft (6) des Stellschiebers (5) mindestens eine Druckausgleichsbohrung (25) aufweist, welche den Fluidraum innerhalb des hohlzylindrischen Ventilkörpers (7) mit einem Fluidraum an der rückseitigen Stirnfläche des Schaftes (6) hydraulisch verbindet und dass in der Zylinderwand des Ventilkörpers (7) mindestens eine Öffnung (26) angeordnet ist, welche in jeder Funktionsstellung des Stellschiebers (5) den Fluidraum innerhalb des Ventilkörpers (7) mit dem ringfönnigen Strömungsraum (19) zwischen dem Polrohr (12) und dem Führungskörper (9) hydraulisch verbindet.

11. Dämpfungsventil (1) nach einem der Ansprüche 1 bis 10, **dadurch gekennzeichnet, dass** der Ventilkörper (7) eine als Schneide ausgebildete Arbeitskante aufweist.

12. Dämpfungsventil (1) nach einem der Ansprüche 1 bis 11, **dadurch gekennzeichnet, dass** in den Führungskörper (9) ein passives Dämpfungselement (27) eingesetzt ist, welches nur in einer Richtung durchströmbar ist.

13. Dämpfungsventil (1) nach Anspruch 12, **dadurch gekennzeichnet, dass** das passive Dämpfungselement (27) an einem mit Einströmöffnungen versehenen Deckel angeordnet ist, der an dem Führungskörper (9) befestigbar ist.

## Claims

1. A damping valve (1) for a hydraulic shock absorber, comprising
an axially movable slide (5) having a shaft (6) and a hollow cylindrical valve body (7),
an electromagnetic linear drive (8) for axially displacing the slide (5), and
a stationarily arranged guide body (9) that is formed as a hollow body and has a pin-shaped end (10),
wherein the hollow cylindrical valve body (7) is guided on the pin-shaped end (10) of the guide body (9) and interacts with a valve opening (11) arranged in the shell of the guide body (9) in such a manner that the free cross-section of the valve opening (11) can be changed by axial movement of the valve body (7), **characterized in that** the slide (5) is arranged in a pole tube (12) that is fixed to the guide body (9) and that the shaft (6) of the slide (5) is guided by a clearance fit in a bearing ring (13) that is fixed to a section of the pole (12), which section encloses the shaft (6).

2. The damping valve (1) according to claim 1, **characterized in that** the pole tube (12) is fixed at the mating surfaces of the guide body (9) by means of a transition fit or an interference fit.

3. The damping valve (1) according to claim 1 or 2, **characterized in that** the slide (5) is guided in the bearing ring (13) and also on the pin-shaped end (10) of the guide body (9) in each case by a clearance fit.

4. The damping valve (1) according to any one of the claims 1 to 3, **characterized in that** the bearing ring (13) consists of a sliding material.

5. The damping valve (1) according to any one of the claims 1 to 4, **characterized in that** the bearing ring (13) is arranged between the end of the pole tube (12) and an axially adjoining magnetic core (15) and that the arrangement consisting of the pole tube (12), the magnetic core (15) and the bearing ring (13) is surrounded by a coil (17) of the linear drive (8).

6. The damping valve (1) according to claim 5, **characterized in that** the bearing ring (13) has a substantially triangular or trapezoidal cross-section, wherein the narrower ring surface (16) of the bearing ring (13) forms the bearing seat for the pin of the slide (5).

7. The damping valve (1) according to any one of the claims 1 to 6, **characterized in that** the pole tube (12) and the guide body (9) delimit a ring-shaped flow chamber (19) in which the valve openings (11) of the guide body (9) end, and that the pole tube (12) has flow-through openings at the shell side through which the fluid can flow out of the flow chamber (19) without throttling.

8. The damping valve (1) according to claim 7, **characterized in that** the valve openings (11) have a heart-shaped contour (21) which, in the closing direction of the slide (5), ends in a tip (22) and extending from said tip (22) transitions symmetrical to a symmetry axis (23) defined by the tip (22) in each case as an arc into a slightly rising edge (24) of a wide opening (26).

9. The damping valve (1) according to claim 8, **characterized in that** the flow-through openings (20) are formed as holes, the centers of which holes are in each case directed towards the symmetry axis (23) of a valve opening (11) of the guide body (9).

10. The damping valve (1) according to any one of the claims 6 to 9, **characterized in that** the shaft (6) of the slide (5) has at least one pressure compensation hole (25) that hydraulically connects the fluid chamber within the hollow cylindrical valve body (7) to a fluid chamber on the rear end face of the shaft (6), and that at least one opening (26) is arranged in the cylinder wall of the valve body (7), which opening hydraulically connects, in any position of the slide (5), the fluid chamber within the valve body (7) to the ring-shaped flow chamber (19) between the pole tube (12) and the guide body (9).

11. The damping valve (1) according to any one of the claims 1 to 10, **characterized in that** the valve body (7) has a working edge that is formed as a blade.

12. The damping valve (1) according to any one of the claims 1 to 11, **characterized in that** a passive damping element (27) is inserted into the guide body (9), wherein a flow can pass through said passive damping element only in one direction.

13. The damping valve (1) according to claim 12, **characterized in that** the passive damping element (27) is arranged on a cover which is provided with inflow openings and which can be fastened to the guide body (9).

## Revendications

1. Soupape d'amortissement (1) pour un amortisseur de vibrations hydraulique comportant :
un coulisseau de commande (5) mobile axialement, qui présente un arbre (6) et un corps de soupape (7) cylindrique creux,
un entraînement linéaire électromagnétique (8) à des fins d'ajustement axial du coulisseau de commande (5) et
un corps de guidage (9) disposé de manière stationnaire, qui ets conçu comme un corps creux et présente une extrémité (10) en forme de tourillon,
dans laquelle le corps de soupape (7) cylindrique creux est guidé sur l'extrémité en forme de tourillon (10) du corps de guidage (9) et coopère avec au moins une ouverture de soupape (11) disposée dans la gaine du corps de guidage (9) de telle sorte que la section transversale libre de l'ouverture de soupape (11) puisse être modifiée par un mouvement axial du corps de soupape (7), **caractérisée en ce que** le coulisseau de commande (5) est disposé dans un tube polaire (12), qui est fixé sur le corps de guidage (9), et **en ce que** l'arbre (6) du coulisseau de commande (5) est guidé avec un ajustement avec jeu dans une bague de palier (13), qui est immobilisée sur une portion du tube polaire (12) entourant l'arbre (6).

2. Soupape d'amortissement (1) selon la revendication 1, **caractérisée en ce que** le tube polaire (12) est fixé avec un ajustement à transition ou un ajustement à pressage des surfaces d'ajustement du corps de guidage (9).

3. Soupape d'amortissement (1) selon la revendication 1 ou 2, **caractérisée en ce que** le coulisseau de commande (5) est guidé respectivement avec un ajustement à transition tant dans la bague de palier (13) que sur l'extrémité en forme de tourillon (10) du corps de guidage (9).

4. Soupape d'amortissement (1) selon une des revendications 1 à 3, **caractérisée en ce que** la bague de palier (13) est constituée d'un matériau glissant.

5. Soupape d'amortissement (1) selon une des revendications 1 à 4, **caractérisée en ce que** la bague de palier (13) est disposé entre l'extrémité du tube polaire (12) et un noyau magnétique (15) qui s'y rattache axialement et **en ce que** l'agencement constitué du tube polaire (12), du noyau magnétique (15) et la bague de palier (13) est entouré par une bobine (17) de l'entraînement linéaire (8).

6. Soupape d'amortissement (1) selon la revendication 5, **caractérisée en ce que** la bague de palier (13) présente une section transversale essentiellement triangulaire ou trapézoïdale, dans laquelle la surface annulaire la plus mince (16) de la bague de palier (13) forme l'emplacement de palier pour le tourillon du coulisseau de commande (5).

7. Soupape d'amortissement (1) selon une des revendications 1 à 6, **caractérisée en ce que** le tube polaire (12) et le corps de guidage (9) délimitent un espace d'écoulement (19) annulaire, dans lequel débouchent les ouvertures de soupape (11) du corps de guidage (9), et **en ce que** le tube polaire (12) présente des ouvertures d'écoulement du côté de la gaine, à travers lesquelles le fluide peut s'écouler sans étranglement hors de l'espace d'écoulement (19).

8. Soupape d'amortissement (1) selon la revendication 7, **caractérisée en ce que** les ouvertures de soupape (11) présentent un contour en forme de coeur (21), qui aboutit dans la direction de fermeture du coulisseau de commande (5) en une pointe (22) et à partir de la pointe (22), symétriquement à un axe de symétrie (23) prescrit à travers la pointe (22), se convertie en un arc dans une bordure (24) montante plate d'une ouverture large (26).

9. Soupape d'amortissement (1) selon la revendication 8, **caractérisé en ce que** les ouvertures traversantes (20) sont conçues comme des alésages, dont les points centraux d'alésages sont orientés respectivement sur l'axe de symétrie (23) d'une ouverture de soupape (11) du corps de guidage (9).

10. Soupape d'amortissement (1) selon une des revendications 6 à 9, **caractérisée en ce que** l'arbre (6) du coulisseau de commande (5) présente au moins un alésage d'équilibrage de pression (25), qui relie hydrauliquement l'espace de fluide à l'intérieur du corps de soupape (7) cylindrique creux avec un espace de fluide sur la surface frontale du côté dorsal de l'arbre (6) et **en ce que** dans la paroi cylindrique du corps de soupape (7) au moins une ouverture (26) est disposée, qui relie hydrauliquement dans chaque position fonctionnelle du coulisseau de commande (5) l'espace de fluide à l'intérieur du corps de soupape (7) avec l'espace d'écoulement (19) annulaire entre le tube polaire (12) et le corps de guidage (9).

11. Soupape d'amortissement (1) selon une des revendications 1 à 10, **caractérisée en ce que** le corps de soupape (7) présente une arête de travail conçue comme un tranchant.

12. Soupape d'amortissement (1) selon une des revendications 1 à 11, **caractérisée en ce que** dans le corps de guidage (9), un élément d'amortissement passif (27) est inséré, qui est traversé par un écoulement dans seulement une direction.

13. Soupape d'amortissement (1) selon la revendication 12, **caractérisée en ce que** l'élément d'amortissement passif (27) est disposé sur un couvercle pourvu d'ouvertures d'entrée d'écoulement, qui peut être fixé sur le corps de guidage (9).
